# EUROPEAN PATENT APPLICATION

(11) **EP 2 060 971 A2**
(43) Date of publication of application: **20.05.2009**
(21) Application number: 08253630.1
(22) Date of filing: 06.11.2008
(51) Int. Cl.: G06F 3/048

(54) **Method and device for controlling scrolling of pages on touch screen of hand-held electronic apparatus**

(30) Priority: 06.11.2007 TW 96141866
(71) Applicant: Giga-Byte Communications, Inc., Hsin-Tien Taipei Hsien (TW); Giga-Byte Technology Co., Ltd., Xindian City, Taipei County 231 (TW)
(72) Inventor: Huang, Cheng-Wen, Hsin-Tien Taipei Hsien (TW)
(74) Representative: Cheyne, John Robert Alexander M.

(57) **Abstract**

A method and device for controlling the scrolling of pages on a touch screen of a hand-held electronic apparatus. A liquid crystal display and a touch panel having a larger area than that of the liquid crystal display are overlapped and combined with each other. The overlapped region is defined as a first touch zone, while the non-overlapped region is defined as second touch zones and a third touch zone. Next, a user determines whether a scroll is shown in the picture of the display. If the user determines that a scroll is shown in the picture, a sliding path is sensed by the second touch zone, and the user controls the page to scroll upwards or downwards in the picture based on the sliding path. The first touch zone is pressed to thereby perform the function of the selected page. If the user determines that a scroll is not shown in the picture, a sliding path is sensed by the third touch zone, and the user controls the page to slide rightwards or leftwards in the picture based on the sliding path. The first touch zone is pressed again to thereby perform the function of the selected page.

## Description

### BACKGROUND OF THE INVENTION

### 1. Field of the Invention

The present invention relates to a touch screen, and in particular to a method and device for controlling the scrolling of pages on a touch screen of a hand-held electronic apparatus.

### 2. Description of Prior Art

Input interface has become a necessary hardware in a hand-held electronic apparatus. Further, numerals, characters, phonetic symbols, roots for inputting method and various functional icons are provided on the input interface, whereby a user can input data or perform various functions preset in the electronic apparatus. Therefore, the input interface is a necessary and very important input means for a hand-held electronic apparatus.

The input interface of a conventional hand-held electronic apparatus is primarily constructed by keys. Now, in order to make the hand-held electronic apparatus to have a large liquid crystal display screen, some of the keys have to be sacrificed. Further, a layer of touch panel is overlapped within the liquid crystal display or the remaining keys. The touch panel is used to replace the sacrificed keys. Via this arrangement, it is convenient for the user to use.

Since the input interface of the hand-held electronic apparatus already has a touch panel and a keypad, when a certain function is to be performed, the user has to operate a plurality of keys simultaneously or use a touch pen to touch the touch panel for several times. Furthermore, only when the pictures on the screen are switched for several times, the function represented by the picture can be performed, which makes the usage inconvenient. Even, when the user is driving a car, the user cannot press a plurality of keys or touch the touch panel for several times to activate the desired function.

Therefore, it is an important issue for the present Inventor to allow the user to switch pages on the screen conveniently.

### SUMMARY OF THE INVENTION

In view of the above, the present invention is to provide a touch panel that has a larger surface area than that of a crystal liquid display and is overlapped on the liquid crystal display. The region of the touch panel overlapped by the liquid crystal display is set as a first touch zone, and the portion of the touch panel not overlapped by the liquid crystal display is set as second touch zones and a third touch zone. Without affecting the original operation of the first touch zone, the starting and ending coordinates of the second and third touch zones are used to determine whether the corresponding page is scrolled and switched or not. In this way, the user can switch the pages in the picture of the screen quickly.

The present invention is to provide a method and device for controlling the scrolling of pages on a touch screen of a hand-held electronic apparatus. The hand-held electronic apparatus has a liquid crystal display and a touch panel having a larger area than that of the liquid crystal display. The region of the touch panel overlapped by the liquid crystal display is a square first touch zone. In the region of the touch panel not overlapped by the liquid crystal display, the left and right portions of this non-overlapped region are defined as second touch zones, while the lower portion of this non-overlapped region is defined as a third touch zone.

First, the user determines whether a scroll is shown in the picture of the display. After the user determines that a scroll is shown in the picture, the user then determines which touch zone is touched by his/her finger. If the user determines that the touch zone touched by his/her finger is the second touch zone, a sliding path from the starting to the ending coordinates of the second touch zone is sensed. According to the starting and ending coordinates, the page on the display can be controlled to scroll upwards and downwards. After the desired page is selected, the user presses the first touch zone to subsequently perform the function of the selected page.

Next, if the scroll is not shown on the picture, the user determines whether the touch zone touched by the user's finger is the third touch zone or not. If the touch zone touched by the user's finger is the third touch zone, the sliding path from the starting to the ending coordinates of the third touch zone is sensed by the finger. According to the starting and ending coordinates, the page on the display can be controlled to slide leftwards or rightwards. After the desired page is selected, the user presses the first touch zone to perform the function of the desired page.

### BRIEF DESCRIPTION OF THE DRAWINGS

Fig. 1 is a schematic view showing the external appearance of the hand-held electronic apparatus of the present invention;
Fig. 2 is a schematic view showing the operating procedure of the touch screen of the hand-held electronic apparatus of the present invention;
Fig. 3 is a schematic view showing that the user's finger slides on the touch screen of the hand-held electronic apparatus of the present invention;
Fig. 4 is another schematic view showing that the user's finger slides on the touch screen of the hand-held electronic apparatus of the present invention;
Fig. 5 is a schematic view showing the control circuit of the present invention;
Figs. 6A to 6C are schematic views showing the first embodiment of the present invention;
Figs. 7A to 7C are schematic views showing the second embodiment of the present invention;
Figs. 8A to 8C are schematic views showing the third embodiment of the present invention; and
Figs. 9A and 9B are schematic views showing the fourth embodiment of the present invention.

### DETAILED DESCRIPTION OF THE INVENTION

The detailed description and technical contents of the present invention will be explained with reference to the accompanying drawings.

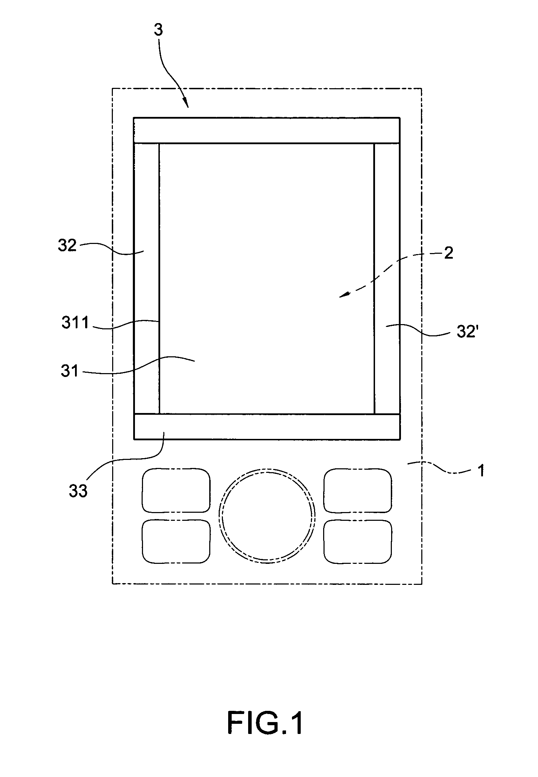

Please refer to Fig. 1, which is a schematic view showing the external appearance of the hand-held electronic apparatus of the present invention. As shown in this figure, the hand-held electronic apparatus 1 of the present invention utilizes a touch panel 3 having a larger area than that of a liquid crystal display (LCD) 2. The region of the touch panel 3 having the same area as the liquid crystal display 2 is defined as a first touch zone 31. The marginal lines of the first touch zone 31 are defined as borders 311. The left and right regions of the touch panel 3 beyond the liquid crystal display 2 are defined as left and right second touch zones 32, 33. Furthermore, the lower region of the touch panel 3 beyond the liquid crystal display 2 is defined as a third touch zone 33.

When the user's finger touches the first touch zone 31, the user can perform the original function of the first touch zone 31. When a scroll 6 is shown in one side of the picture on the display 2, the user's finger slides on the second touch zone 32 or 32', so that a sliding path from the starting coordinate to the ending coordinate is used to control a page (not shown) to scroll upwards or downwards on the display 2. Furthermore, the second touch zone 32 is suitable for a left-handed user, while the second touch zone 32' is suitable for a right-handed user. When the user's finger slides on the surface of the third touch zone 33, a sliding path from the starting coordinate to the ending coordinate is used to control a page to scroll rightwards or leftwards on the display 2. In this way, the page can be scrolled upwards, downwards, leftwards or downwards quickly.

For example, the page can be a mobile phone picture, MP3 player picture, GPS picture, or FM radio picture. When the user's finger slides on the second touch zones 32, 32' or the third touch zone 33, the user can control the mobile phone picture, MP3 player picture, GPS picture, or FM radio picture to scroll upwards, downwards, leftwards or downwards, whereby the pages can be switched.

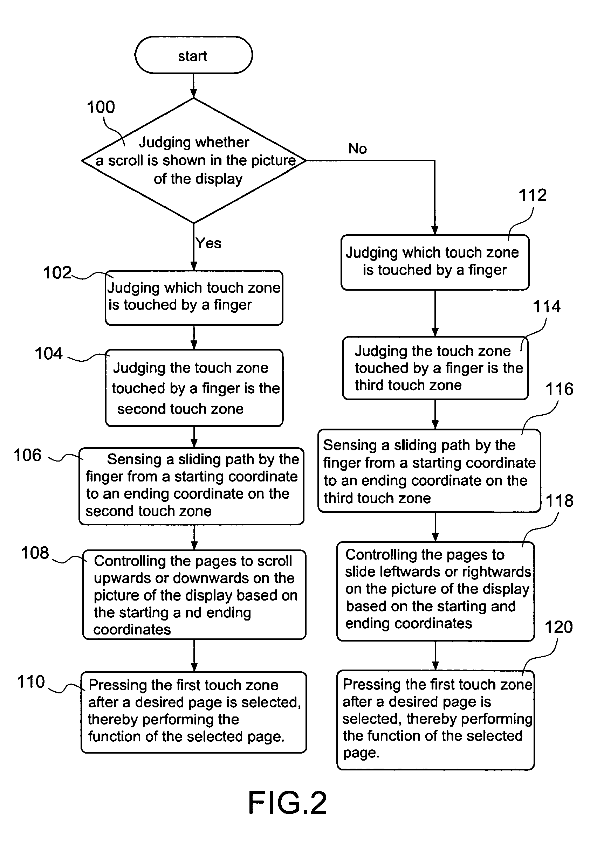

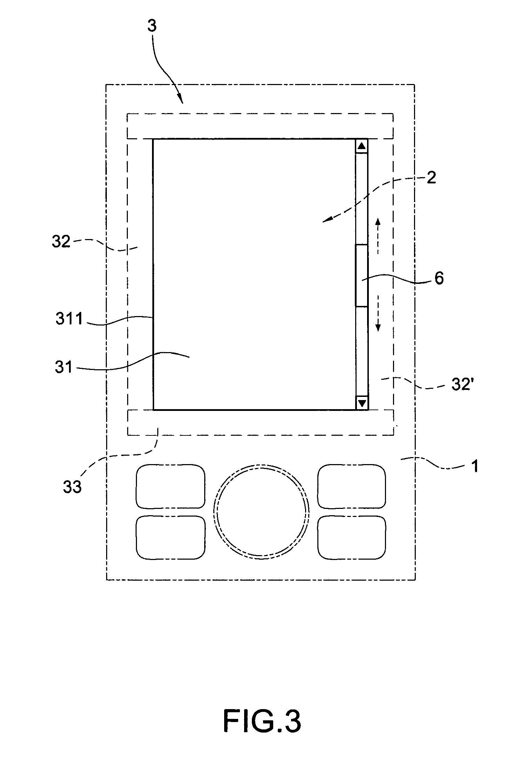

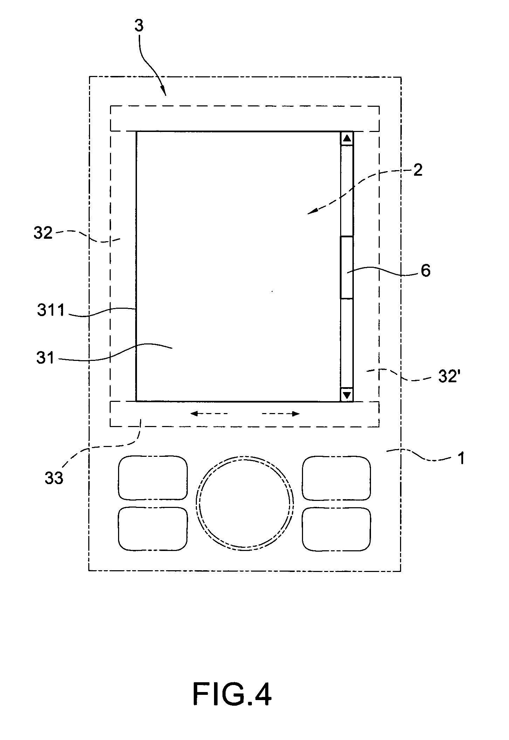

Please refer to Figs. 2 to 4. Fig. 2 is a schematic view showing the operating procedure of the touch screen of the hand-held electronic apparatus of the present invention. Fig. 3 is a schematic view showing that the user's finger slides on the second zone of the hand-held electronic apparatus of the present invention, and Fig. 4 is another schematic view showing that the user's finger slides on the third touch zone of the hand-held electronic apparatus of the present invention. As shown in these figures, when the user's finger operates on the touch screen, the user first determines whether a scroll 6 is shown in the picture on the display 2 (Step 100). After the user determines that a scroll 6 is shown on the picture, the user then determines which touch zone is touched by his/her finger (Step 102). If the user determines that the touch zone touched by his/her finger is the second touch zone (Step 104), a sliding path from the starting to the ending coordinates of the second touch zone is sensed by the user's finger (Step 106). According to the starting and the ending coordinates, the page can be controlled to scroll upwards or downwards on the display 2 (Step 108). After the desired page is selected, the user presses the first touch zone to perform the function of the selected page (Step 110).

If the user determines in the step 100 that a scroll 6 is not shown, the user then determines which touch zone is touched by his/her finger (Step 112). If the user determines that the touch zone touched by his/her finger is the third touch zone (Step 114), a sliding path from the starting to the ending coordinates of the third touch zone is sensed by the user's finger (Step 116). According to the starting and the ending coordinates, the page can be controlled to slide leftwards or rightwards (Step 118). After the desired page is selected, the user presses the first touch zone to perform the function of the selected page (Step 120).

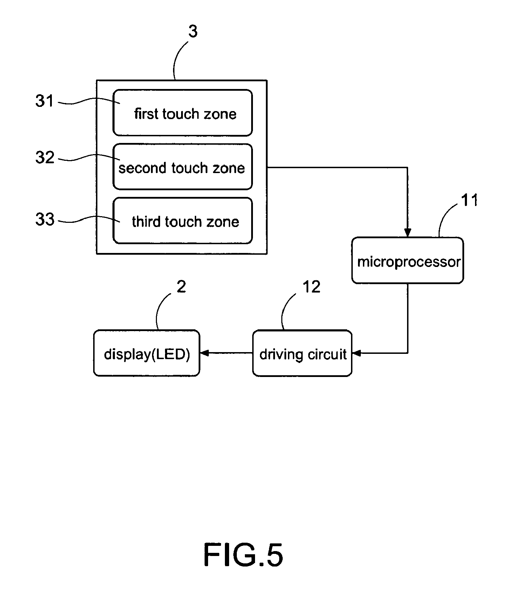

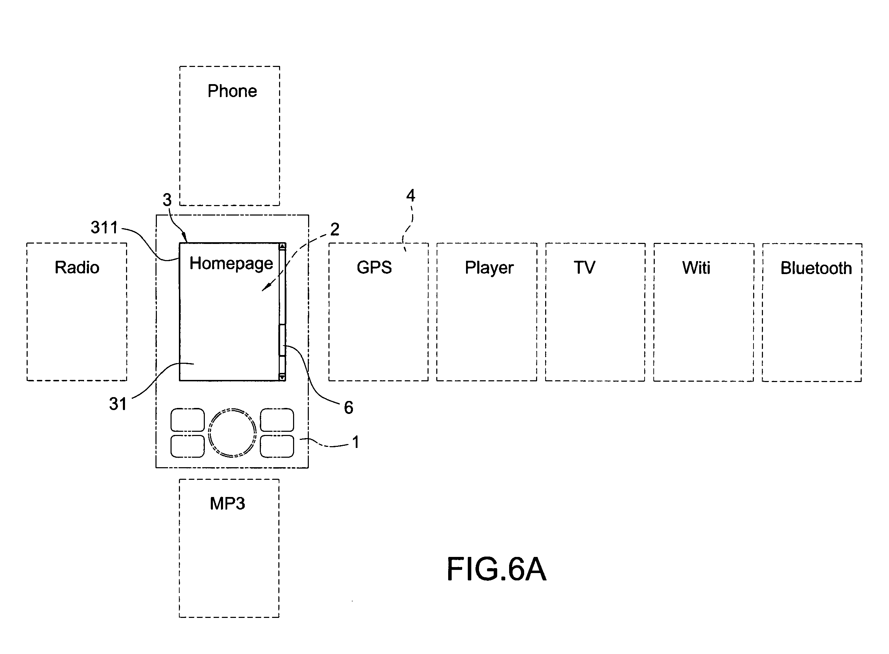

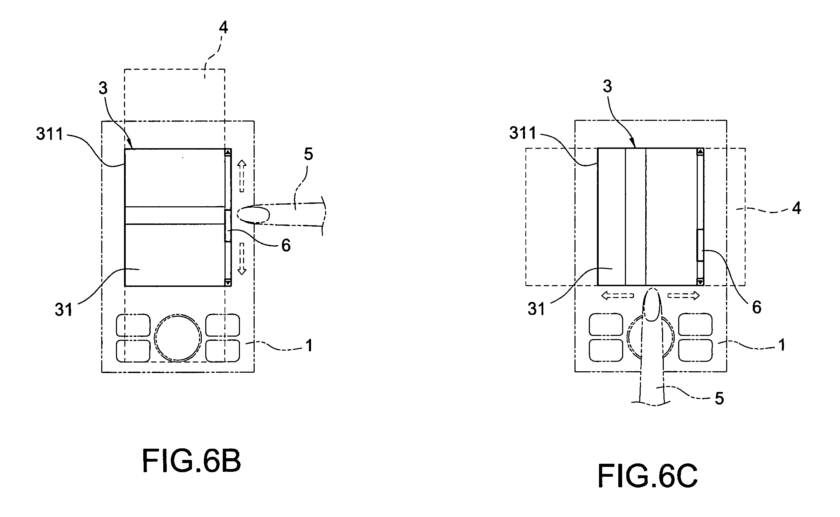

Please refer to Figs. 5 and 6A to 6C, which show the control circuit of the present invention and a first embodiment thereof. As shown in these figures, the pages 4 of a mobile phone picture, MP3 player picture, GPS picture, functional picture, message editing picture and the FM radio are arranged in a cross. When the user's finger 5 slides upwards and downwards on the second touch zone 32, the signals sensed by the second touch zone 32 are transmitted to a microprocessor 11. The microprocessor 11 processes the signals so as to control a driving circuit 12 to drive each page 4 in the picture of the display 2 to slide upwards or downwards slowly. After the desired page 4 is selected, the user presses the first touch zone 31 to perform the function of the selected page 4. If the user's finger slides on the third touch zone 33 leftwards or rightwards, each page 4 will slide leftwards or rightwards slowly in the picture of the display. After the desired page 4 is selected, the user presses the first touch region 31 to perform the function of the selected page 4.

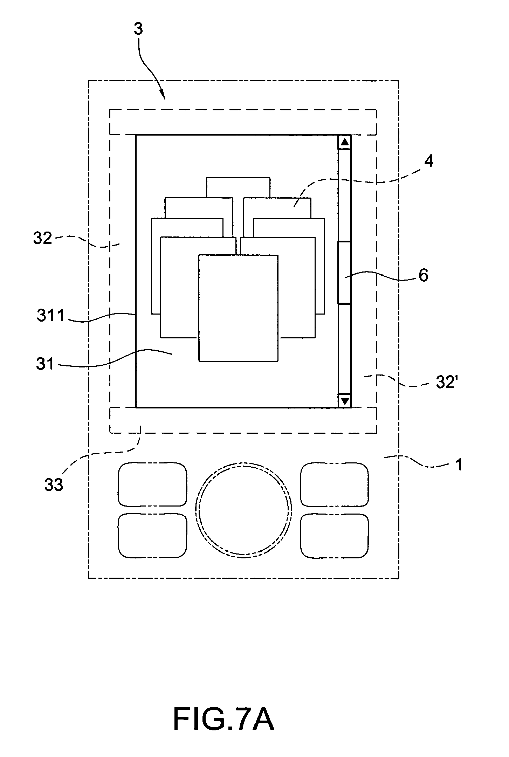

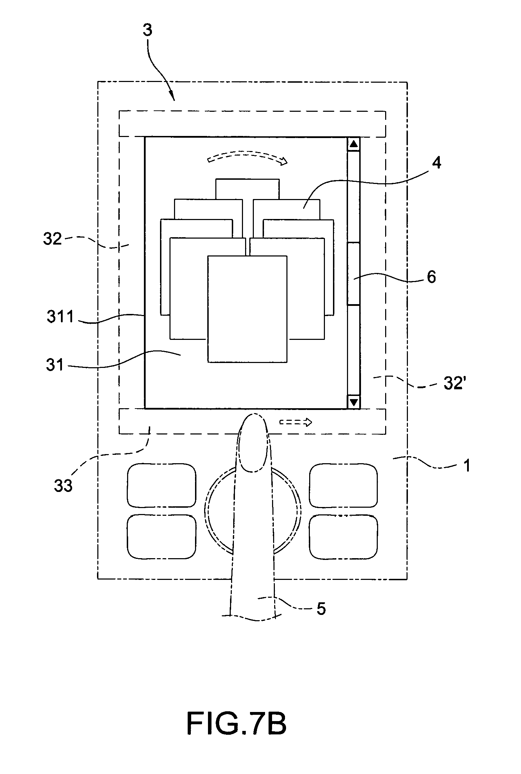

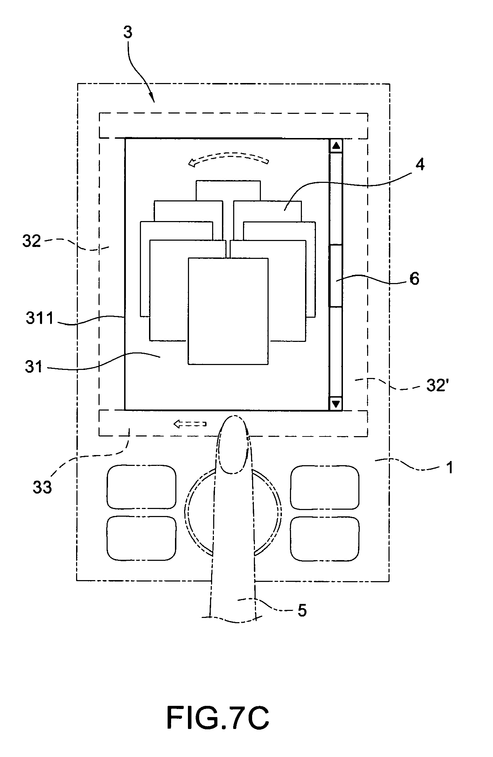

Please refer to Figs. 5 and 7A to 7C, which show the control circuit of the present invention and a second embodiment thereof. As shown in these figures, the pages 4 of a mobile phone picture, MP3 player picture, GPS picture, functional picture, message editing picture and the FM radio are arranged in a circle. When the user's finger 5 slides on the third touch zone 33 from left to right, the signals sensed by the third touch zone 33 are transmitted to the microprocessor 11. The microprocessor 11 processes the signals so as to control the driving circuit 12 to drive each page 4 in the picture of the display 2 to rotate clockwise. The selected page 4 will be displayed in the most top layer. After the desired page 4 is selected, the user presses the first touch zone 31 to perform the function of the selected page 4.

If the user's finger slides on the third touch zone 33 from right to left, the signals sensed by the third touch zone 33 are transmitted to the microprocessor 11. The microprocessor 11 processes the signals so as to control the driving circuit 12 to drive each page 4 in the picture of the display 2 to rotate counterclockwise. The selected page 4 will be displayed in the most top layer. After the desired page 4 is selected, the user presses the first touch zone 31 to perform the function of the selected page 4.

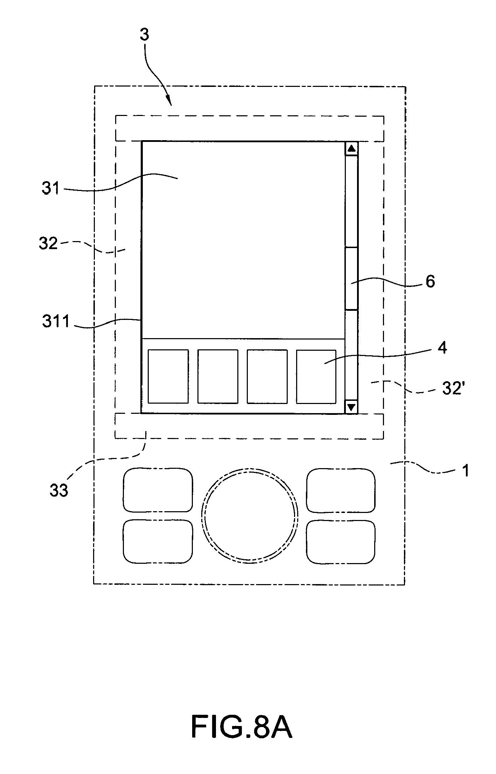

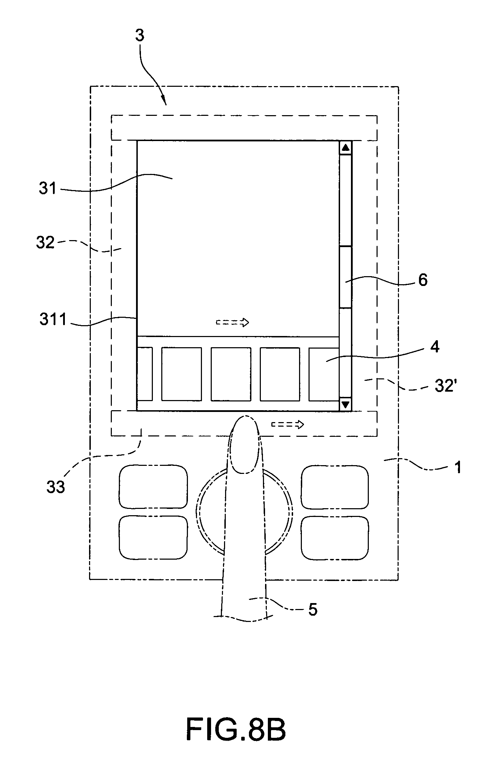

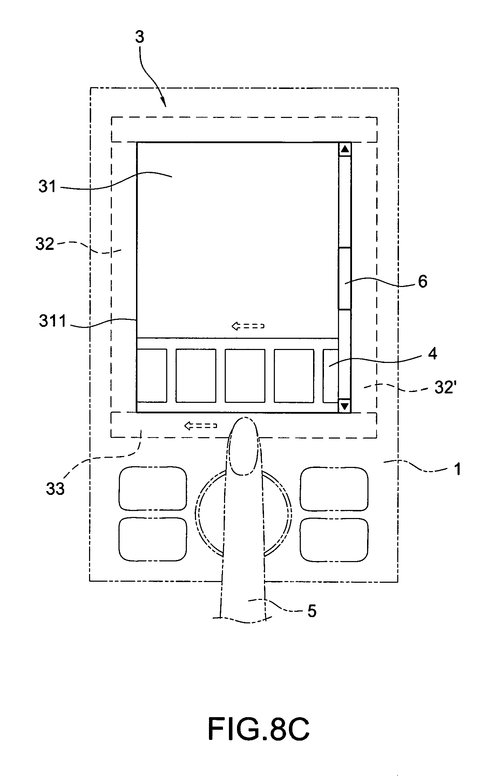

Please refer to Figs. 8A to 8C, which show the control circuit of the present invention and a third embodiment thereof. As shown in these figures, the pages 4 of a mobile phone picture, MP3 player picture, GPS picture, functional picture, message editing picture and the FM radio are arranged like a conveyor belt. When the user's finger 5 slides s on the third touch zone 33 from left to right, the signals sensed by the third touch zone 33 are transmitted to a microprocessor 11. The microprocessor 11 processes the signals so as to control the driving circuit 12 to drive each page 4 in the picture of the display 2 to slide from left to right slowly. The selected page 4 is stopped in the screen. At this time, the user presses the first touch zone 31 to perform the function of the selected page 4.

When the user's finger slides on the third touch zone 33 from right to left, the signals sensed by the third touch zone 33 are transmitted to the microprocessor 11. The microprocessor 11 processes the signals so as to control the driving circuit 12 to drive each page 4 in the picture of the display 2 to slide from right to left slowly. The selected page 4 is stopped in the screen. At this time, the user presses the first touch zone 31 to perform the function of the selected page 4.

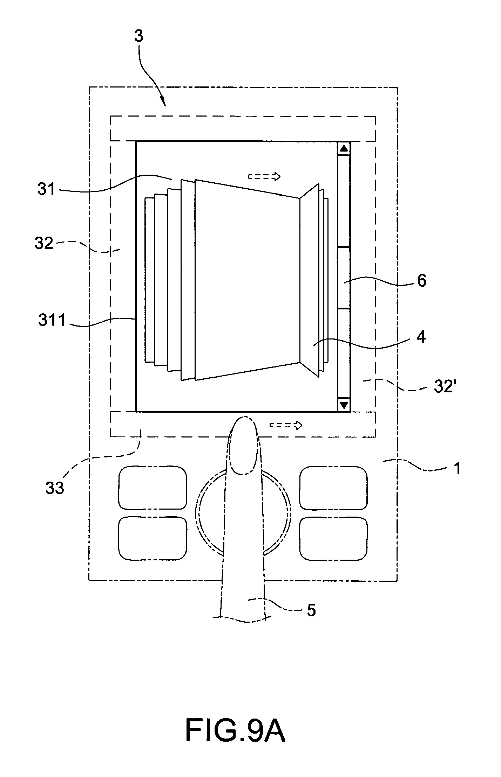

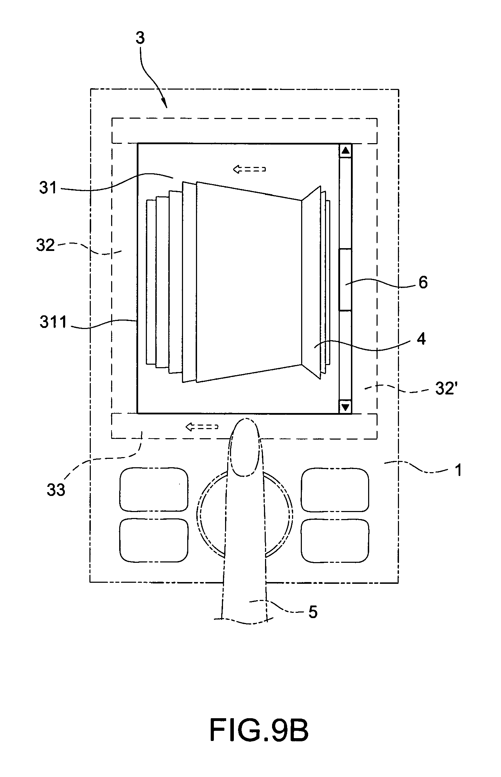

Please refer to Figs. 9A and 9B, which show the control circuit of the present invention and a fourth embodiment thereof. As shown in these figures, the pages 4 of a mobile phone picture, MP3 player picture, GPS picture, functional picture, message editing picture and the FM radio are arranged like a half-opened book. When the user's finger 5 slides s on the third touch zone 33 from left to right, the signals sensed by the third touch zone 33 are transmitted to a microprocessor 11. The microprocessor 11 processes the signals so as to control the driving circuit 12 to drive each page 4 in the picture of the display 2 to turn rightwards like pages of the book. The selected page 4 is stopped in the center of the screen. At this time, the user presses the first touch zone 31 to perform the function of the selected page 4.

When the user's finger slides on the third touch zone 33 from right to left, the signals sensed by the third touch zone 33 are transmitted to the microprocessor 11. The microprocessor 11 processes the signals so as to control the driving circuit 12 to drive each page 4 in the picture of the display 2 to turn leftwards like pages of the book. The selected page 4 is stopped in the screen. At this time, the user presses the first touch zone 31 to perform the function of the selected page 4.

Furthermore, when the user switches the pages 4 via the second and third touch zones 32, 32' and 33, a built-in system can activate to generate a sound effect via a speaker within the electronic apparatus upon the switching of each page 4, thereby increasing the interest in operating the present invention.

## Claims

1. A method for controlling scrolling of pages (4) on a touch screen of a hand-held electronic apparatus (1), the hand-held electronic apparatus (1) having a liquid crystal display (2) and a touch panel (3) with a larger area than that of the liquid crystal display (2), a region of the touch panel (3) overlapped by the liquid crystal display (2) being a square first touch zone (31), left and right portions of a region of the touch panel (3) not overlapped by the liquid crystal display (2) being defined as second touch zones (32, 32'), a lower portion of a region of the touch panel (3) not overlapped by the liquid crystal display (2) being defined as a third touch zone (33), the method comprising the steps of:
a) determining whether a scroll (6) is shown in a picture on the display (2);
b) sensing a sliding path and direction from a starting coordinate to an ending coordinate on the second touch zone (32, 32') if a scroll (6) is shown on the picture of the display (2), controlling a sensed scrolling state of the page (4) on the picture of the display (2) based on the sliding path and direction; and
c) sensing a sliding path and direction from a starting coordinate to an ending coordinate on the third touch zone (33) if the scroll (6) is not shown on the picture of the display (2), controlling a sensed sliding state of the page (4) on the picture of the display (2) based on the sliding path and direction.

2. The method according to claim 1, wherein the sensed scrolling state of the page (4) on the picture of the display (2) is to slide upwards when the sliding path sensed by the second touch zone (32, 32') in the step b) is from bottom to top.

3. The method according to claim 1, wherein the sensed scrolling state of the page (4) on the picture of the display (2) is to slide downwards when the sliding path sensed by the second touch zone (32, 32') in the step b) is from top to bottom.

4. The method according to claim 1, wherein after a page (4) is selected in the step b), the first touch zone (31) is pressed to thereby perform the function of the selected page (4).

5. The method according to claim 1, wherein the page (4) is sensed to slide rightwards on the picture of the display (2) when the sliding path sensed by the third touch zone (33) in the step c) is from left to right.

6. The method according to claim 1, wherein the page (4) is sensed to slide leftwards on the picture of the display (2) when the sliding path sensed by the third touch zone (33) in the step c) is from right to left.

7. The method according to claim 1, wherein after a page (4) is selected in the step c), the first touch zone (31) is pressed to thereby perform the function of the selected page (4).

8. The method according to claim 1, wherein the pages (4) in the step c) are arranged in a circle, the pages (4) rotate clockwise when a sliding path sensed by the third touch zone (33) is from left to right, the selected page (4) is displayed on the most top layer, after a desired page (4) is selected, the first touch zone (31) is pressed to thereby perform the function of the selected page (4).

9. The method according to claim 8, wherein the pages (4) rotate counterclockwise when a sliding path sensed by the third touch zone (33) is from right to left, the selected page (4) is displayed on the most top layer, after a desired page (4) is selected, the first touch zone (31) is pressed to thereby perform the function of the selected page (4).

10. The method according to claim 1, wherein the pages (4) in the step c) are arranged as a half-opened book, each page (4) turns rightwards like turning pages of the book when a sliding path sensed by the third touch zone (33) is from left to right, the selected page (4) is stopped in the center of the screen, and the first touch zone (31) is pressed at this time to thereby perform the function of the selected page (4).

11. The method according to claim 10, wherein each page (4) turns leftwards like turning pages of the book when a sliding path sensed by the third touch zone (33) is from right to left, the selected page (4) is stopped in the center of the screen, and the first touch zone (31) is pressed at this time to thereby perform the function of the selected page (4).

12. The method according to claim 10, wherein a built-in system drives a speaker to generate a sound effect when scrolling or switching each page (4) in the operations of step c) and step b).

13. A device for controlling scrolling of pages (4) on a touch screen of a hand-held electronic apparatus (1), comprising:
a display (2);
a touch panel (3) provided on the surface of the display (2), a region of the display (2) corresponding to the touch panel (3) being defined as a first touch zone (31), the periphery of the first touch zone (31) being defined as second and third touch zones (32, 32', 33);
a microprocessor (11) electrically connected to the touch panel (3);
a driving circuit (12) electrically connected to the microprocessor (11) and the display (2);
wherein the second and third touch zones (32, 32', 33) of the touch panel (3) are used to sense a sliding path in operation and then control the scrolling of the pages (4) on the display (2) based on the sliding path.

14. The device for controlling the scrolling of pages (4) on a touch screen of a hand-held electronic apparatus (1) according to claim 13, wherein marginal lines of the first touch zone (31) are defined as borders (311) between the first touch zone (31) and the second and third touch zones (32, 32', 33).

15. The device for controlling the scrolling of pages (4) on a touch screen of a hand-held electronic apparatus (1) according to claim 13, wherein the first touch zone (31) and the second and third touch zones (32, 32', 33) are located on the same touch panel (3).
